(19) **Europäisches Patentamt**

**European Patent Office**

**Office européen des brevets**

(11) **EP 1 707 501 A2**

(12) **EUROPEAN PATENT APPLICATION**

(43) Date of publication:
04.10.2006 Bulletin 2006/40

(51) Int Cl.:
*B65D 81/34* (2006.01)   *H05B 6/64* (2006.01)

(21) Application number: 06111780.0

(22) Date of filing: 27.03.2006

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: 28.03.2005 US 665761 P

(71) Applicant: **Silberline Manufacturing Co., Inc.**
**Tamaqua PA 18252 (US)**

(72) Inventors:
• **Buchala, John**
**Tamaqua,, PA 18252 (US)**
• **Keemer, Craig**
**Reading,, PA 19601 (US)**
• **Jenkins, William**
**Larskville,, PA 18704 (US)**
• **Schoppe, Robert**
**Bloomsburg,, PA 17815 (US)**

(74) Representative: **Portal, Gérard et al**
**Cabinet Beau de Loménie**
**158, rue de l'Université**
**75340 Paris Cédex 07 (FR)**

(54) **Microwave susceptor for cooking and browning food**

(57)   A microwaveable food container includes an even mixture of metal particles and insulating particles. The mixture of metal and insulating particles allows higher heat to be generated at the surface and applied more evenly to the food, resulting in better browning of certain foods and better cooking of dough-based products such as pizza. Methods of making food containers, methods of cooking, and compositions useful for making food containers also are disclosed.

EP 1 707 501 A2

## Description

The present application draws priority from U.S. Provisional Patent Application Serial No. 60/665,761, filed on March 28, 2005, and which is entitled "Microwave Susceptor for Cooking and Browning Applications," and which is incorporated herewith by reference in its entirety.

## Background of Invention

The use of microwave radiation to heat foods has become increasingly more desirable due to its speed, efficiency and low cost. A considerable drawback of microwave heating technology, however, is its inability to both achieve high enough heat to fully cook raw foods and to brown and crisp food surfaces without the use of special packaging materials.

Vacuum metallization of paperboard used in microwave packaging has been used in the past to create the necessary high surface heat needed to brown and crisp some foods. In most cases, the metal of choice for this application has been aluminum. However, vacuum metallization cannot be used efficiently to coat patterns or specific areas of paperboard or to lay down varying amounts of metal onto a packaging surface.

In order to overcome the disadvantages of vacuum metallized paperboard, a variety of other microwave heating technologies have been devised that utilize inks or coatings compositions containing metal powders or flakes, either alone or in combinations with other materials. Huang and Plorde, in EP Pat. No. 0,242,952, disclose a dielectric substrate with a coating on at least one side comprising metal or metal alloy flakes (preferably aluminum flakes) in a thermoplastic resin. U.S. Pat. No. 4,982,064, from Hartman, et al, specifies a heating element between two layers of paper, comprised of a combination of finely divided microwave reactive material (aluminum, tin, bronze, nickel, etc.) which is conductive, semi-conductive, or ferromagnetic; carbon black or graphite; and a powdered inert solid temperature moderator (clay, silica, alumina, calcium carbonate, etc.) in a resin binder. In U.S. Pat. Nos. 4,943,456, 5,002,826, and 5,118,747; Pollart and Lafferty describe the use of a coating containing a combination of finely divided carbon black or graphite; finely divided metal such as aluminum, tin, or bronze; and a finely divided inert solid (preferably clay or calcium carbonate) combined in a resin binder on a substrate of paper, paperboard, or heat stable polyester film. U.S. Pat Nos. 4,864,089 and 4,876,423 from Tighe and Parker describe a microwave susceptor package to brown foods consisting of a substrate which is either comprised of or coated with a combination of a resin binder with fillers of metallic particles (nickel, iron, zinc, copper, or preferably aluminum flake, powder, fluff, fiber, or needles having a particle size of 1-19 microns) and semiconductor particles (carbon black, titanium carbide, zinc oxide). Fabish, et al, in US Pat. Nos. 5,258,596 and 5,391,430, discloses a laminate of a metal substrate coated on one side with a polymer material containing both dielectric (aluminum, carbon, graphite, pillared clays, or ferroelectric crystals of perovskite structure) and magnetic (iron or ferrite) particles. Alessio, in WO Pat. No. 4,048,463, provides thermoplastic polyolefin compositions containing both a metal powder and a tertiary phosphine or amine. However, none of these technologies provides the combination of high temperatures, evenness of heating, and control of heating that are desired for this application.

In a method for the intensification of microwaves described in the book "Sound Waves and Light Waves" by Winston E. Kock (1965), a lattice of regularly ordered conductive spheres, disks, or strips are evenly separated from one another with an insulating medium. The conductive spheres, disks, or strips used were macroscopic in size; for instance, steel ball bearings, metal coated pearls, and the like; this concept was intended specifically for telecommunication applications.

## Summary of Invention

The present invention provides a heat generating microwave susceptor to produce even surface browning and can be incorporated into many forms of coatings, inks, plastics, laminates, etc., with varying metal loadings using conventional coating, printing, molding, thermoforming, etc. equipment. The composition of this microwave susceptor allows for even heating of the surface on which it is coated and has utility in a variety of applications. The composition includes a combination of a finely divided conductive metal powder or flake; preferably an aluminum powder or flake, with finely divided, low aspect ratio, insulating particles, preferably spherical glass particles, which possess a relatively tight distribution of both aspect ratio and particle size. This mixture of conductive material with low aspect ratio insulating particles allows for a regular, lattice-like separation and isolation of the individual particles of conductive material. In most cases, the particles will be carried in a solvent or in water (when used in liquid coatings or printing inks), or a plasticizer or resin binder (when used in molding into thermoplastic or thermoset resins, or extrusion into thick and thin film thermoplastic resin sheet for use in thermoforming or laminated resin layers), but they may also be used in a dry state (especially for use in powder coatings).

The present invention encompasses products that are useful as containers for food, which includes containers intended only to be cooking containers and containers intended to be packaging for the food as well as useful in cooking. The present invention encompasses combinations of food to be cooked with such containers. The present invention encompasses methods for making such containers, compositions useful for making such containers and methods for cooking food by applying microwave energy to food contained by the containers.

**Detailed Description of the Invention**

The present invention provides an improved susceptor for microwave cooking and improved heat distribution for browning and crisping of foods when incorporated into a variety of microwaveable food packages. This material, in the form of an ink or coating, can be applied to food container packaging such as paperboard, plastic, and/or foam substrates. When combined into resins via injection molding or by extruded sheet or film, this material can be formed into, or form a part of, microwaveable plates, bowls, trays, packaging films, inserts, utensils, etc. The thickness of the coating, ink, or molded/extruded material can be varied or tailored to the specific heating and/or browning need. These coated, molded and/or extruded objects can then be utilized in the storage and preparation of frozen or thawed foods. The incorporation of this susceptor technology into the food package may take the form of liquid or powder coatings; flexographic, gravure, or silk screen printing inks; molding into thermoplastic or thermoset resins; or extrusion into thick and thin film thermoplastic resin sheet for use in thermoforming or laminating resin layers.

The finely divided conductive metal powder or flake of the present invention may be composed of aluminum, copper, zinc, tin, bronze, silver, iron, stainless steel, nickel, gold, or any other conductive metal. Various geometries of the particles may be used, as described below.

Metal powders are characterized by having low aspect ratios; generally less than 10 and most typically less than 3. The aspect ratio of a particle is its length (the largest dimension of the particle) divided by its thickness (the smallest dimension measured perpendicular to the length). Metal powders are usually produced by atomization of the molten metal followed by rapid solidification, and are used commonly in powder metallurgy, as precursors for metal flakes (as described below), and, for reactive metals, in explosives and pyrotechnics. In some cases, the metal powders may be gently polished, for example in a ball mill or attritor, to smooth the surface and, in some cases, to remove some of the oxide on the surface of the powder; in order to increase the brightness of the powder to provide a more pleasing aesthetic effect. For use in the present invention, the average particle size (length) of the metal powder should be between 1 and 50 microns. Powders with an average particle size of less than 10 microns are preferred, especially in coatings and inks, because larger powders tend to protrude through the surface of the coating or ink, resulting in a rough surface and a less desirable aesthetic effect. Larger particle size powders can be used effectively in molding, extrusion, or calendaring into thermoplastic or thermosetting resins, which are much thicker than coating or ink films.

Metal flakes are characterized by having high aspect ratios, ranging from 10 to 10,000 typically. They are commonly used as pigments in liquid and powder coatings, inks, and plastics, both to impart desirable functional properties; such as conductivity, or to provide a barrier to oxygen or water migration; and for aesthetics enhancement; such as bright appearance at low viewing angles combined with a darker appearance at high viewing angles (the "face-flop" phenomenon) and, in some cases, color. The most common metal flake pigments are aluminum, due to its malleability and high specular reflectance. Metal flakes are most typically made by grinding metal powders or foils into small particles with high aspect ratios, using ball mills, attritors, and the like. The flakes produced by these methods can be further characterized by details of the geometry, as described below.

"Cornflake" metal flakes are characterized by having rough edges, uneven surfaces, and relatively high aspect ratios of about 50 to 2000. Their average particle size ranges from about 4 microns to about 600 microns, and their average thickness from about 0.05 microns to 0.5 microns. Examples of "cornflake" pigments are the products sold by Silberline Mfg. Co. under the Sparkle Silver tradename.

"Silver dollar" or "lenticular" metal flakes are characterized by having (as compared to "cornflake" materials) more regular, more nearly round edges, smoother surfaces, and lower aspect ratios of about 10 to 200. Their average particle size ranges from about 4 microns to about 80 microns, and their average thickness from about 0.1 microns to 2.0 microns; and they have a narrower particle size distribution than "cornflake" materials. Examples of "silver dollar" pigments are the products sold by Silberline Mfg. Co. under the Sparkle Silver Premier tradename. A subset of "silver dollar" flakes are "degradation resistant" products, which have similar characteristics except for somewhat lower aspect ratios, ranging from about 10 to 50. Examples of "degradation resistant silver dollar" pigments are the products sold by Silberline Mfg. Co. under the Tufflake tradename.

An alternative method to produce metal flake pigments uses a flexible substrate which is coated with a polymeric resin release coat, followed by metallization by physical vapor deposition. The release coating is solubilized by immersion into an appropriate solvent, releasing very thin metal particles which are subsequently reduced to the desired particle size. As with other metal flake pigments, these vacuum metal deposition ("VMD") pigments are most typically made of aluminum. Compared to metal flake pigments made by conventional grinding techniques, "VMD" pigments are much thinner and have much smoother surfaces, resulting in a very bright appearance due to enhanced specular reflectance. "VMD" pigments typically range from 0.005 to 0.05 microns (50 to 500 Angstroms) in thickness and have an average particle size of about 5 to 30 microns, with very high aspect ratios of about 100 to 10,000. Examples of "VMD" pigments are the products sold by Silberline Mfg. Co. under the StarBrite tradename.

The most preferred finely divided conductive metal powder or flake of the present invention is made of aluminum (due to high conductivity, easy availability, and relatively low cost), has either the "silver dollar" or "VMD" geometry (as the smooth faces of these materials leads to enhanced microwave performance), and has an average particle size ranging from 5 to 100 microns. The preferred particle size can depend in part on the intended application. For gravure or flexographic inks, which tend to have very low film thicknesses, smaller flakes, ranging from 5 to 25 microns, are preferred. For coatings, somewhat larger flakes can be used, ranging from 5 to 60 microns. In plastics, which are relatively much thicker than inks or coatings, larger flakes, ranging from 50 to 100 microns, are preferred.

In order to obtain the lattice of regularly ordered conductive particles described by Kock, the aforementioned metallic component is incorporated with finely divided, low aspect ratio, insulating particles, which possess a relatively tight distribution of both aspect ratio and particle size, and which are large enough to produce a spacing between the metal powder or flake particles at least equal to, and preferably greater than, the smallest dimension of the metal powder or flake. The lattice should be such as to provide a regular spacing between the conductive particles, and to ensure that the conductive particles are substantially surrounded by insulating material. The conductive particles being substantially surrounded means that individual conductive particles are surrounded by insulating material, i.e. not in contact with other conductive particles, or small groups of conductive particles are in contact with each other, with the small groups being surrounded by insulating material, i.e. not in contact with other conductive particles. The small groups generally will contain fewer than ten conductive particles, preferably fewer than six particles, and most preferably three or fewer particles.

Separation of the metallic powder or flake by a continuous insulating layer, such as the resin binder used in inks or coatings or the polymer chains of molded or extruded plastic articles, does not by itself result in a distribution of the metal particles that is regular enough to achieve the desired intensification of the microwave radiation. Similarly, the use of insulating particles with a wide distribution of either particle size or aspect ratio does not produce a lattice-like arrangement of the metal powder or flake, and insulating particles with a high aspect ratio (such as platelets or flakes), or with a particle size that is smaller than the thickness of the metal powder or flakes, do not achieve an adequate three-dimensional spacing between the metal powder or flakes. The material of the insulating particles should meet the classic definition of an insulator; i.e., as defined in the MacMillen Encyclopedia of Physics (1996) as materials with resistivities of $10^8$ ohm-m or higher. These materials include, but are not limited to, glasses, ceramics, rubbers, many metal oxides and plastics, and the like.

The insulating particles should have an average particle size of between 0.1 to 50 microns, and preferably between I to 20 microns. For use in coatings and inks, particles with an average particle size of less than 10 microns are preferred; most preferably less than 5 microns, because larger particles tend to protrude through the surface of the coating or ink, resulting in a rough surface and a less desirable aesthetic effect. The insulating particles should have a particle size distribution in which at least 80% of the particles fall within a 15 micron range. The mean aspect ratio of the insulating particles should be 4 or less, preferably 2 or less, and the range of aspect ratios should be within +/- 1 of the mean, preferably within +/- 0.5 of the mean. The most preferable aspect ratio for the insulating particles is 1.0; e.g., either spheres or cubes, as this geometry provides equal spacing in all three dimensions and allows for the regular spacing arrangement and isolation of the particles of conductive metal material. As a practical matter, spheres are preferred, as they are easier to manufacture than cubes and other regular solids. These spheres may be solid, hollow with thin walls, hollow with thick walls, or combinations of these. Also as a practical matter, glass or ceramics are preferred as the material for these particles, as spherical products made with these materials, which conform to the requirements for particle size and distribution, are readily available commercially.

In a preferred embodiment, the individual conductive particles or small groups of particles are separated from their nearest neighboring conductive particle or small group of conductive particles by a monolayer of insulating particles. Thus, the distance between the neighboring individual particles or small groups of particles will be about the same as the thickness or diameter of the insulating particles. It is not necessary for the insulating particles to contact each other.

The average particle size and the particle size distribution of both the conductive and insulating particles may be measured by any convenient technique. In the coatings industry, this is most frequently done using laser diffraction methods, using equipment such as the Malvern Mastersizer, and this method is used for purposes of determining the particle size and particle size distribution for the present invention. In order to calculate the aspect ratio, the thickness of the particles needs to be measured or calculated. An estimation of average thickness can be calculated by determining the water coverage area (WCA) for a monolayer of the material, using the procedure described by J. D. Edwards and R.I. Wray; Aluminum Paint and Powder (3rd edition), pp 16 to 22, Reinhold Publishing Corp., New York (1955). As described therein, the average thickness of the particles (d, $\mu$m) is obtained according to the following equation:

$$d\ (\mu m) = 0.4\ (m^2\ x\ \mu m\ x\ g^{-1})\ /\ WCA\ (m^2\ x\ g^{-1}).$$

The thickness value obtained in this manner is sufficiently accurate for purposes of the present invention, and this method is used for determining the thickness when needed for the present invention.

Both the metal and insulating components will be mixed together thoroughly at a metal to insulator ratio between 9:1 and 1:9 by weight; preferably between 5:1 and 1:5, and most preferably between 2:1 and 1:2; and combined with any solvent, water, plasticizer, or resin binder chosen to be compatible with the system into which the susceptor will be placed. The mixing action should be low shear, to avoid bending or deforming the metal powder or flake and to avoid chipping or shattering the insulating particles. The time and degree of mixing should be adequate to ensure a thorough, homogeneous, distribution of both the metal powder or flake and the insulating particles throughout the composition, e.g. resulting in the metal powder or flake particles being substantially surrounded by the insulating particles. The combination of the metal powder or flake and the insulating particles can either be done in a separate step, or as part of the process used to make the liquid or powder coating, ink, or plastic formulation. However, it is preferable to make the combination of the metal powder or flake and the insulating particles in a separate operation, both to make the sure there is an intimate mixture of the two components and to ensure that the degree of shear imparted is low enough to avoid any damage to either component. As part of this separate operation, any solvent, water, plasticizer, or resin binder that is desirable for the final application also can be incorporated with the metal powder or flake and the insulating particles.

The composition of the present invention may be incorporated into packaging for foods for microwave preparation by a variety of well known methods. Perhaps the most versatile method is in the form of an ink or coating that can be applied to food container packaging such as paperboard, plastic, and/or foam substrates, as this method allows for the application to only selected areas of the packaging and provides a means to easily vary the thickness of the application to tailor the use to the specific heating and/or browning need. The ink or coating is composed of, at least, the composition of the present invention, a resin binder, and a solvent or water as a carrier. Depending on the application, other materials; such as surfactants, dispersants, flow and leveling aids, stabilizers, other pigments or fillers, rheology modifiers, crosslinkers, etc; may be used to provide the desired properties. Optionally, a secondary microwave-active material, which is conductive, semi-conductive, or ferromagnetic, may also be used. An ink may be applied by any convenient method, such as gravure, flexographic, silk screening, and the like. Likewise, a liquid coating may be applied by any convenient method, such as spraying, brushing, rolling, dipping, in-mold coating, and the like; and application of a powder coating may be done by spraying, fluidized bed coating, and the like. In any of the above mentioned forms, the amount of the composition used should be sufficient to provide the conductive metal powder or flake at 1% to 50%, preferably 3% to 30%, of the weight of the resin binder used in the ink or coating formulation, and the thickness of the ink or coating film should be from 0.1 to 10 mils, preferably 0.5 to 4 mils. Both the amount of the conductive metal powder or flake and the thickness of the coating will depend upon the exact metal powder or flake used, the degree of heating and/or browning required, and the aesthetic effect desired.

Alternatively, the composition of the present invention may be compounded into a thermoplastic or thermosetting resin. This resin compound is composed of, at least, the composition of the present invention and a thermoplastic or thermosetting resin binder. Depending on the application, other materials; such as plasticizers, lubricants, processing aids, stabilizers, other pigments or fillers, rheology modifiers, crosslinkers, etc; may be used to provide the desired properties. Optionally, a secondary microwave-active material, which is conductive, semi-conductive, or ferromagnetic, may also be used. This resin compound may be formed into a thin or thick film; by extrusion, calendaring, three-roll milling, and the like; which may be used to coat part or all of a microwave packaging container by lamination, thermoforming, and like techniques. The thickness of the film will depend upon the exact metal powder or flake used, the degree of heating and/or browning required, and the aesthetic effect desired. The resin compound may also be used directly within the whole of a plastic microwave packaging container, by extrusion, injection molding, blow molding, and the like. This latter method does not provide as much control over the thickness of the susceptor layer, but is useful when the same degree of heating and/or browning is required throughout the entire package. In either case, the amount of the composition used in the thermoplastic or thermosetting resin should be sufficient to provide the conductive metal powder or flake at 0.5% to 25%, preferably 5% to 20%, of the weight of the thermoplastic or thermosetting resin.

Since the composition of the present invention is to be used in the preparation of food items, it is very desirable if all of the components of the composition are suitable for use in food contact applications. Each component should either be on the list of the materials that are Generally Recognized As Safe (GRAS), or should be approved for the specific application and resin system under the appropriate section of the US Code of Federal Regulations (CFR). Such approval may not be required if the finished package utilizes a microwave-transparent coating which prevents direct contact of the food with composition of the present invention. In this case, the microwave-transparent coating must be comprised only of materials that are suitable for use in food contact applications, as defined above, and must prevent the migration of any component of the composition of the present invention through the microwave-transparent coating to ensure that no food contact occurs. However, the utilization of such a microwave-transparent coating adds an additional step to the manufacture of container, and therefore increases the cost of the final product.

Whether produced by printing, coating, or compounding into a plastic resin, the susceptor of the current invention can either be fabricated into a one-use container; which is used to package food products for shipment from the manufacturer to the customer and then is used for the microwave cooking and browning of the food before being discarded; into a multiple-use container; into which food is loaded for microwave cooking and browning followed by subsequent cleaning and reuse; or into a removable, reusable insert; which is placed into a container appropriate for microwave cooking in order to achieve more even heating and browning of the food placed therein followed by subsequent cleaning and reuse.

Containers fabricated with the susceptor of the current invention can be used to prepare any food which can be heated by microwave radiation, but are most effectively used to prepare food products which have a browned or crisped surface when cooked by non-microwave methods such as baking, roasting, broiling, pan-frying, or grilling. Examples include, but are not limited to; meats, poultry, fish, and seafood (all of which may be breaded or not); dough products such as pizzas, strombolis, pierogies, meat pies, and the like; and vegetables such as peppers, onions, mushrooms, eggplant, squash, tomatoes, and the like.

The invention will be illustrated by the following non-limiting examples.

**Examples**

**Example 1:** 1000 grams of SSP-554; a "silver dollar" type aluminum pigment produced by Silberline Mfg. Co, Inc. containing 70% by weight of aluminum flakes with an average particle size of 15 microns; is added to a ribbon-blade mixer. To this is added 700 grams of spherical glass particles with an average particle size of 4 microns, a particle size distribution in which greater than 80% of the particles fall between I and 10 microns, and an aspect ratio range of 1.0 to 1.25, to provide a composition with a metal to insulator ratio of 1:1. Additional solvent is added to maintain a smooth, pasty consistency, and the mixture is agitated at low speed for two hours to produce a thorough, homogeneous, distribution of both the aluminum flake and the glass spheres throughout the composition.

**Comparative Example 1:** Example I is repeated, but using the SSP-554 aluminum pigment without the addition of the glass spheres.

**Evaluation:** The products of Example 1 and Comparative Example 1 are added to an ink formulation in amounts necessary to provide aluminum flakes at 12% of the weight of the resin binder in the ink. Each ink is applied by gravure printing to a paperboard substrate and allowed to dry completely. Commercial frozen pizzas are placed onto each paperboard substrate, and are cooked in the same microwave oven at the power level and for the time recommended by the manufacturer of the pizzas. Upon completion, both pizzas are thoroughly heated throughout, but the one cooked on the paperboard substrate printed with the ink from Example I has a crust that is more evenly and completely browned, and which is crisper and more similar to that obtained from a conventional oven, while the crust of the one cooked on the paperboard substrate printed with the ink from Comparative Example 1 is soggier and has a more doughy consistency.

**Examples 2 and 3 and Comparative Examples 2-7:** Resin compounds, with compositions as detailed in Table 1, are prepared and injection molded into discs which are 2.25 inches in diameter and 0.125 inches thick. The materials used in these compositions are:

• Aluminum metal flakes- Silvet 440-30-E1 from Silberline, a pigment with average particle size of 83 microns
• Glass spheres - as used in Example I
• Carbon black - a high conductivity carbon black of 30 nm average particle size, used as a secondary microwave-active material
• Fumed silica - a low aspect ratio material of 12 nm average particle size, used as an "inert solid" as described in prior art from Hartman and Pollart and Lafferty.
• Kaolin clay - a high aspect ratio platy material of 0.2 micron average particle size, used as an "inert solid" as described in prior art from Hartman and Pollart and Lafferty.
• PS resin - a general purpose polystyrene resin with a melt flow index of 1.50.

**Table 1 -Compositions of Examples 2-3 and Comparative Examples 2-7**

|  | Alum. Metal | Glass Spheres | Carbon Black | Fumed Silica | Kaolin Clay | PS Resin |
|---|---|---|---|---|---|---|
| **Ex 2** | 10.0% | 10.0% | ----- | ----- | ----- | 80.0% |
| **Comp Ex 2** | 10.0% | ----- | ----- | ----- | ----- | 90.0% |
| **Comp Ex 3** | 10.0% | ----- | ----- | 1.0% |  | 89.0% |
| **Comp Ex 4** | 10.09% | ----- | ----- | ----- | 1.0% | 89.0% |
| **Ex 3** | 10.0% | 10.0% | 0.5% | ----- | ----- | 79.5% |
| **Comp Ex 5** | 10.0% | ----- | 0.5% | ----- | ----- | 89.5% |
| **Comp Ex 5** | 10.0% | ----- | 0.5% | 1.0% | ----- | 88.5% |

(continued)

|  | Alum. Metal | Glass Spheres | Carbon Black | Fumed Silica | Kaolin Clay | PS Resin |
|---|---|---|---|---|---|---|
| Comp Ex 7 | 10.0% | ----- | 0.5% | ----- | 1.0% | 88.5% |

**Evaluation:** The molded discs are set on top of a thermally insulating and non-microwave-active support, and placed in the center of a microwave oven equipped with a mode stirrer to provide uniform microwave energy within the enclosure. Fiber optic thermocouples are attached by glass tape to the top surface of the disc, one near the center of the disc and one near the edge, and are connected to a data recorder. The oven door is closed, and microwave energy of 2.5 GHz frequency and 800 watts power is applied for five minutes, with the temperature at the two locations monitored by the data recorder. The peak temperatures achieved are detailed in Table 2.

**Table 2 - Evaluation Results of Examples 2-3 and Comparative Examples 2-7**

|  | Peak Surface Temp Center of Disc | Peak Surface Temp Near Edge of Disc |
|---|---|---|
| Ex 2 | 285 F | 250 F |
| Comp Ex2 | 240 F | 220 F |
| Comp Ex 3 | 270 F | 245 F |
| Comp Ex 4 | 255 F | 210 F |
| Ex 3 | 385 F | 280 F |
| Comp Ex 5 | 300 F | 260 F |
| Comp Ex 5 | 300 F | 250 F |
| Comp Ex 7 | 280 F | 240 F |

The examples of the current invention produce a higher temperature across the whole surface of the disc, compared to the same microwave-active materials without the insulating spheres or combined with the "inert solids" of prior art, which provides for more even cooking and browning performance.

While a detailed description of the present invention has been provided above, the present invention is not limited thereto. Modifications not affecting the spirit of the invention will be apparent. The invention is defined by the claims that follow.

**Claims**

1. A food container, comprising an even mixture of conductive metal particles and insulating particles, in which there is a regular spacing of the conductive particles and the conductive particles are substantially surrounded by insulating particles.

2. The food container of claim 1, wherein the mixture is present as a coating.

3. The food container of claim 1 or 2, comprising a molded resin composition, wherein the resin composition comprises the mixture of metal particles and insulating particles.

4. The food container of anyone of claims I to 3, wherein the conductive particles are in flake or powder form having a particle size not greater than 100 microns.

5. The food container of anyone of claims I to 4, wherein the insulating particles have an average particle size of between 0.1 to 50 microns.

6. The food container of anyone of claims 1 to 5, wherein the insulating particles have an average particle size of 1 to 20 microns.

7. The food container of anyone of claims I to 6, wherein the insulating particles have an average particle size of less than 10 microns.

**8.** The food container of anyone of claims 1 to 7, wherein the insulating particles have an average particle size of less than 5 microns.

**9.** The food container of anyone of claims I to 8, wherein the insulating particles have a particle size distribution in which at least 80% of the particles fall within a 15 micron range.

**10.** The food container of anyone of claims I to 9, wherein the insulating particles have a mean aspect ratio of 4 or less.

**11.** The food container of claim 10, wherein the mean aspect ratio is 2 or less.

**12.** The food container of claim 10 or 11, wherein the insulating particles have a range of aspect ratios within +/- 1 of the mean.

**13.** The food container of claim 12, wherein the insulating particles have a range of aspect ratios within +/- 0.5 of the mean.

**14.** The food container of anyone of claims 1 to 13, wherein the insulating particles are made of ceramic or glass.

**15.** The food container of anyone of claims 1 to 14, further comprising a food to be cooked.

**16.** The food container of claim 15, wherein the container has a form of a package for the food.

**17.** The food container of anyone of claims 1 to 16, further comprising a secondary microwave-active material.

**18.** The food container of claim 17, wherein the secondary microwave-active material is selected from conductive, semi-conductive, and ferromagnetic.

**19.** A method of cooking food, comprising applying microwave energy to food contained in a food container of anyone of claims I to 18.

**20.** A composition useful for producing a microwaveable food container, comprising an even mixture of conductive metal particles and insulating particles in which the metal particles are substantially surrounded by the insulating particles.

**21.** The composition of claim 20, which is in the form of a coating material and further comprises a carrier for the mixture.

**22.** The composition of claim 20 or 21, wherein the conductive metal particles and/or the insulating particles are as defined in anyone of claims 1 to 14.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 66576105 P
- EP 0242952 A
- US 4982064 A, Hartman
- US 4943456 A
- US 5002826 A
- US 5118747 A
- US 4864089 A
- US 4876423 A
- US 5258596 A
- US 5391430 A
- WO 4048463 A

### Non-patent literature cited in the description

- **WINSTON E. KOCK.** Sound Waves and Light Waves. 1965
- MacMillen Encyclopedia of Physics. 1996
- **J. D. EDWARDS ; R.I. WRAY.** Aluminum Paint and Powder. Reinhold Publishing Corp, 1955, 16-22